# EUROPEAN PATENT SPECIFICATION

(11) **EP 0 715 833 B1**
(45) Date of publication and mention of the grant of the patent: **04.09.2002**
(21) Application number: 95119352.3
(22) Date of filing: 08.12.1995
(51) Int. Cl.: A61C 3/02, G09B 23/28

(54) **A practical cutting bur and a method of having practical training for the cutting of human tooth by using it**
Fräswerkzeug und Verfahren zur Ausübung des Schneidens eines menschlichen Zahnes mit solch einem Werkzeug
Fraise et procédé pour la pratique de coupe d'une dent humaine avec une telle fraise

(30) Priority: 09.12.1994 JP 30623294
(43) Date of publication of application: 12.06.1996
(73) Proprietor: KABUSHIKI KAISHA MATSUTANI SEISAKUSHO, Tochigi-ken (JP)
(72) Inventor: Aono, Masao, c/o Asahi University, Motosu-gun, Gifu-ken (JP); Yamamoto, Kohji , c/o Asahi University, Motosu-gun, Gifu-ken (JP); Matsutani, Kanji, c/o K.K. Matsutani Seisakusho, Shioya-gun, Toshigi-ken (JP); Tezuka, Satoshi, c/o K.K. Matsutani Seisakusho, Shioya-gun, Toshigi-ken (JP)
(74) Representative: Patentanwälte Westphal, Mussgnug & Partner

(56) References cited:
- WO-A-93/16457
- US-A- 4 416 634
- US-A- 4 690 642
- US-A- 4 834 655
- US-A- 4 869 788
- US-A- 4 902 232
- US-A- 5 310 342
- PATENT ABSTRACTS OF JAPAN vol. 009, no. 070 (M-367), 30 March 1985 & JP-A-59 201765 (SHIJI SHIKA KOGYO KK), 15 November 1984,
- PATENT ABSTRACTS OF JAPAN vol. 014, no. 342 (C-0743), 24 July 1990 & JP-A-02 126843 (IDEMITSU PETROCHEM CO LTD), 15 May 1990,

## Description

### BACKGROUND OF THE INVENTION

### 1. Field of the Invention

The present invention relates to a practical cutting bur according to the preamble of claim 1 and a method of having practical training for the cutting of human tooth by using it, and particularly to a practical cutting bur which enables students of dentistry to grasp the same sense of cutting as that of the time when human tooth is cut, by cutting an artificial tooth for the practice by the practical cutting bur.

### 2. Description of the Prior Art

Such a practical cutting bur is disclosed in JP 21 268 43.

In the dental treatment, it is carried out that a diamond bur provided with a cutting portion having abrasive grains with uniform grain sizes secured on a base metal is attached to an air motor, and the diamond bur, which is rotated by the air motor, is pressed against human dentin or dental enamel, by which a cavity is formed or an abutment is formed. For this reason, students of dentistry have training for the cutting of human tooth by the diamond bur.

It is preferable to have the above-mentioned training by using human tooth. However, it is difficult to collect human teeth under such circumferences that extractions of teeth decrease by reason of the development of dental treatment. Therefore, artificial teeth are made of epoxy resin or polypropylene resin, and provided for the practical training.

However, there is a problem that the machinability of the time when the artificial tooth is cut by an diamond bur differs from the machinability of the time when human dentin or dental enamel is cut by the diamond bur in the depth cuttable under the same load applied on human dentin or dental enamel. Namely, under the same condition of operation of an air motor, if materials to be cut change, cutting depth of cavity formed changes.

In the dental treatment, it is practically impossible to operate an air motor with measuring pressure against human tooth by a diamond bar when cutting human dentin or dental enamel. Therefore, the difference between the sense of cutting by diamond bur in which students of dentistry experienced in training and the sense of cutting by diamond bur which they will feel in cutting human tooth in the dental treatment makes training for the cutting tooth by diamond bur meaningless. For this reason, the development of a method of having practical training for the cutting of human tooth is firmly demanded, which enables students of dentistry to experience the sense of cutting by diamond bur in the dental treatment.

### BRIEF SUMMARY OF INVENTION

It is an object of the present invention to provide a practical cutting bur which enables students of dentistry to experience the same sense of cutting by diamond bur as that of the time when they cut human tooth in the dental treatment, by cutting an artificial tooth made of plastics.

It is a second object of the present invention to provide a method of having practical training for the cutting of human tooth by cutting artificial tooth made of plastic by means of a practical cutting bur attached to a rotary instrument in which students of dentistry can experience the same sense of cutting by diamond bur as that of the time when they cut human tooth, by cutting an artificial tooth made of plastics.

The first object of the present invention is achieved with a practical cutting bur according to claim 1.

In the above-mentioned practical cutting bur of the present invention, the cutting portion may have the shape tapered toward the top thereof.

In the above-mentioned practical cutting bur of the present invention, the mixture of various abrasive grains with different grain sizes is composed of abrasive grains of grain size number # 600, abrasive grains of grain size number # 230, and abrasive grains of grain size number # 120.

Further, In the above-mentioned practical cutting bur of the present invention, the mixture composed of abrasive grains of grain size number # 600, abrasive grains of grain size number # 230, and abrasive grains of grain size number # 120 may be any one of a mixture of 25 % of abrasive grains of grain size number # 600, 50 % of abrasive grains of grain size number # 230, and 25 % of abrasive grains of grain size number # 120, a mixture of 50 % of abrasive grains of grain size number # 600, 25 % of abrasive grains of grain size number # 230, and 25 % of abrasive grains of grain size number # 120, and a mixture of 25 % of abrasive grains of grain size number # 600, 25 % of abrasive grains of grain size number # 230, and 50 % of abrasive grains of grain size number # 120.

The second object of the present invention is achieved, according to the present invention, by a method of having practical training for the cutting of human tooth by cutting artificial tooth made of plastic by means of a practical cutting bur attached to a rotary instrument, wherein the practical cutting bur is a practical cutting bur comprising a shank which has an end held by the rotary instrument, and a cutting portion which is an integral part of the shank, the surface of the cutting surface having a mixture of various abrasive grains with different grain sizes secured to the cutting portion, and the artificial tooth is made of epoxy resin or polypropylene resin.

In the above-mentioned method, the practical cutting bur can be used, which has the mixture of various abrasive grains with different grain sizes, composed of abrasive grains of grain size number #600, abrasive grains of grain size number # 230, and abrasive grains of grain size number # 120.

Further, in the above-mentioned practical method, the practical cutting bur can be used, which has any one of a mixture of 25 % of abrasive grains of grain size number # 600, 50 % of abrasive grains of grain size number # 230, and 25 % of abrasive grains of grain size number # 120, a mixture of 50 % of abrasive grains of grain size number # 600, 25 % of adhesive grains of grain size # 230, and 25 % of adhesive grains of grain size # 120, and a mixture of 25 % of adhesive grains of grain size # 600, 25 % of adhesive grains of grain size # 230, and 50 % of adhesive grains of grain size # 120.

In the above-mentioned cutting bur ( it is referred to as "diamond bur"), the sense of cutting by diamond bur of the time when cutting an artificial tooth made of plastics such as epoxy resin or polypropylene attached to an air motor is nearly equal to the sense of cutting by the diamond bur of the time when cutting human tooth by diamond bur attached to an air motor for the treatment.

### BRIEF DESCRIPTION OF THE DRAWINGS

In the drawings,
Fig. 1 is a view for showing the construction of a diamond bur of the present invention;
Fig. 2 is an enlarged detail of the cutting portion of the diamond bur;
Fig. 3 is a schematic representation for showing an experimental equipment for measuring the machinability of the diamond bur; and
Fig. 4 is a graphical representation in which the machinability of the diamond bur of the present invention of the time when an artificial tooth made of epoxy resin is cut by the diamond bur of the present invention is compared with the machinability of a diamond bur on the market of the time when human dentin and dental enamel are cut by a diamond bur on the market.
Fig. 5 shows various shapes of the diamond bur.

### DETAILED DESCRIPTION

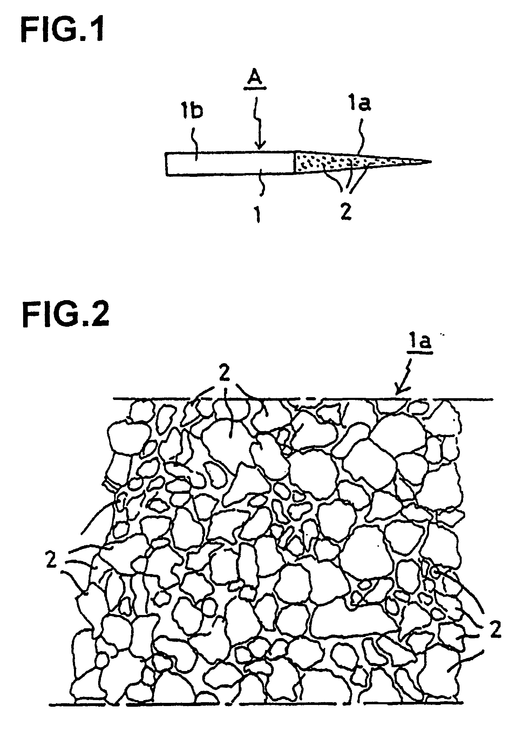

Referring to Figs. 1 and 2, the construction of diamond bur A of the present invention is explained. By the way, a diamond bur on the market and a diamond bur of the present invention are provided with abrasive grains secured to a base metal, respectively, and so is referred to "grinding technique". However, since grinding of human tooth and an artificial tooth is given the word "cutting" in terms standardized in the Welfare Ministry and the dentistry, a term "cutting" is used in the following description.

Referring to Figs. 1 and 2, diamond bur A of the present invention comprises stick-shaped base metal 1 formed with cylindrical shank 1b on one side of diamond bur A, and cutting portion 1a formed on base metal 1 on the other side of diamond bur A extending over a given length from an end of diamond bur A. Shank 1b is held by a chuck of an air motor ( not shown). The number of revolutions of an air motor is desirably 16 × 10⁴ r. p. m to 45 × 10⁴ r.p.m.when tooth is cut by diamond bur A.

As shown in Fig. 2, mixture 2 of abrasive grains, in which abrasive grains made of diamond, cubic system boron nitride or the like having grain size number # 600, # 230, and # 120, respectively are mixed with appropriate ratio determined according to material of artificial tooth, is secured to base metal 1 in cutting portion la. In the present example, an artificial tooth made of epoxy resin is used, and diamond bur A, in which a mixture of 25 % of abrasive grains of grain size number # 600, 50 % of abrasive grains with grain size number # 230, and 25 % of abrasive grains with grain size number # 120 is secured to base metal 1, is used.

The size of abrasive grain represented by grain size number is as shown in the following Table 1.

**TABLE 1**

| Grain size number | Grain size of used diamond | Reference average grain size in micron |
|---|---|---|
| #120 | 120∼140 | 125 |
| #230 | 230∼270 | 63 |
| #600 | 20∼30 | 25 |

In order to secure mixture 2 of grains to base metal 1, as disclosed in Japanese Patent Publication (Kokai) Heisei 1(1987)- 140157, base metal 1 and a container containing mixture 2 of abrasive grains are dipped into electrolyte in which metal such as nickel is dissolved so that metallic layer can be formed on base metal 1 by electroplating, while mixture 2 of abrasive grains can be secured in the metallic layer, by which diamond bur A in which abrasive grains having various grain sizes are secured to base metal 1 can be formed.

In the diamond bur on the market, abrasive grains having equal grain sizes selected according to the purpose of cutting of an artificial tooth are secured to base metal 1. By the diamond bur, a cavity with the desired shape can be formed by cutting human dentin, and dental enamel with the nearly same sense of cutting by diamond bur.

In diamond bur A of the present invention in which mixture A of abrasive grains composed of grains having various grain sizes is secured to base metal 1, abrasive grains having larger grain size and abrasive grains having smaller grain size are wholly put on base metal 1. As a result, a large number of pockets for letting cutting dusts off are formed between abrasive grains having various grain sizes.

First, since an artificial tooth is softer than a human tooth and has larger elasticity than a human tooth, the entering length of cutting portion 1a into an artificial tooth changes according to force applied on diamond bur A. Namely, when load is smaller, an artificial tooth is cut by parts of abrasive grains projecting out in cutting portion 1a (abrasive grains having relatively larger abrasive grain sizes), and as loads are increased, the whole abrasive grains secured to base metal 1 in cutting portion 1a will be used for cutting of artificial tooth. Then, cutting dusts of an artificial tooth generated by cutting the artificial tooth by diamond bur A are removed through pockets formed between abrasive grains. Namely, when an artificial tooth is cut by diamond bur A of the present invention, with the increase of load, the machinability of diamond bur A can be increased.

A man, which has practical training in cutting human tooth, can grasp the same sense of cutting by diamond bur as that which is experienced when human tooth is cut by diamond bur for treatment, by cutting an artificial tooth by diamond bur A having the above-mentioned machinability.

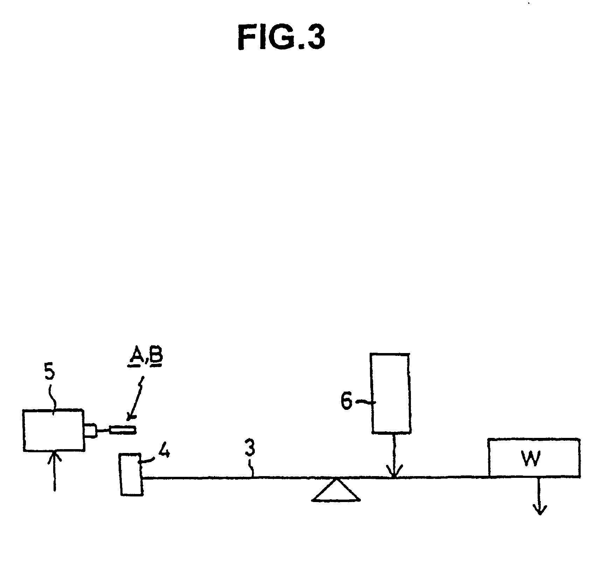

Then, the machinability of when cutting an artificial tooth made of epoxy resin by diamond bur A of the present invention is compared with the machinability of when cutting human tooth by a diamond bur on the market. When comparing both the machinabilities, an experimental equipment as shown in Fig. 3 is used, by which the cutting depth of material to be cut is measured against load.

The construction of an experimental equipment shown in Fig. 3 is explained as follows. The experimental equipment has pendulum 3, one end of which is provided with weight W, and to the other end of which material 4 to be cut such as an artificial tooth made of epoxy resin or human tooth is attached. Air motor 5 is fixed opposite to material 4 to be cut, and diamond bur A of the present invention or diamond bur B on the market is held by air motor 5. Sensor 6 for measuring an amount of displacement of pendulum 3 is disposed on a given place on pendulum 3, by which the cutting depth of material to be cut per an hour can be measured under the state where a given load is applied to diamond bur A or diamond bur B.

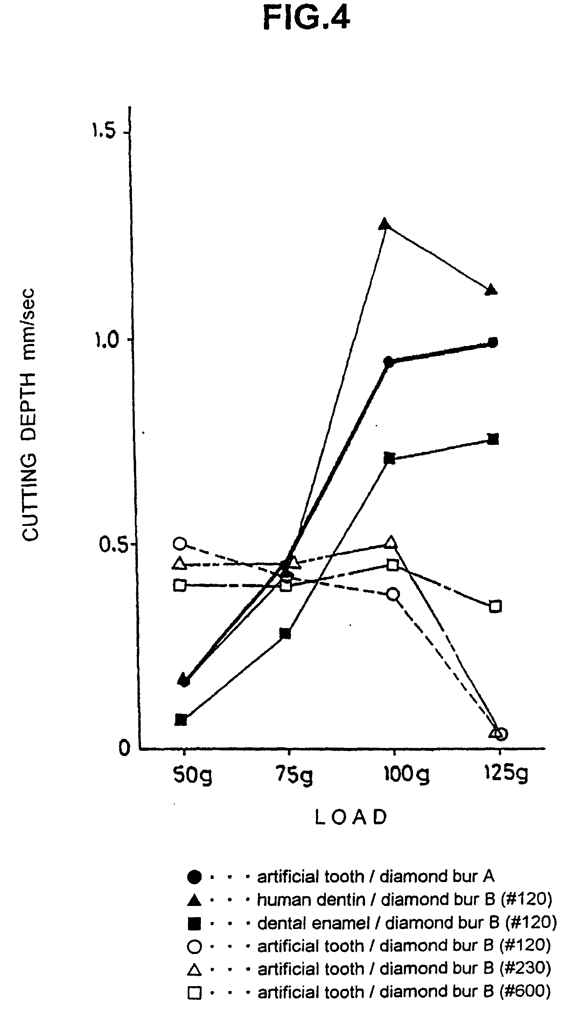

Diamond bur A of the present invention, and diamond bur B on the market are held by air motor 5 in the above-mentioned experimental equipment, and samples of an artificial tooth made of epoxy resin, and human dentin and dental enamel as material to be cut are attached to one end of pendulum 3. The cutting depths per one hour when loads W is 50 g, 75 g, 100 g, or 125 g is measured. The results are shown in Fig. 4. In the experiment, air motor with numbers of revolutions 20 × 10⁴∼30 × 10⁴ r. p. m. is used.

In Fig. 4, plot ―●― indicates cutting depth mm/sec against load g of the time when an artificial tooth made of epoxy resin is cut by diamond bur A, plot -▲- indicates cutting depth mm/sec against load g of the time when human dentin is cut by the diamond bur B on the market having abrasive grains of grain size number # 120, and ―■― indicates cutting depth mm/sec against load g of the time when dental enamel is cut by the diamond bur B on the market having abrasive grains of grain size number # 120. Further, plot ―□― indicates cutting depth mm/sec against load g of the time when an artificial tooth made of epoxy resin is cut by diamond bur B on the market having abrasive grains of grain size number # 600, plot ―Δ―indicates cutting depth mm/sec against load g of the time when an artificial tooth made of epoxy resin is cut by diamond bur B having abrasive grains of grain size number # 230, and plot ―○― indicates cutting depth mm/sec against load g of the time when an artificial tooth made of epoxy resin is cut by the diamond bur B on the market having abrasive grains of grain size number # 120.

As apparent from Fig. 4, when an artificial tooth made of epoxy resin is cut by diamond bur A of the present invention, though the machinability changes according to grain size of abrasive grains more or less, with the increase of load applied on diamond bur B, the machinability decreases. On the other hand, when dentin of human tooth or dental enamel is cut, with the increase of load, the machinability increases.

Namely, since diamond bur B on the market has abrasive grains of uniform grain size, and the cutting portion thereof has the surface of a few quantity of unevenness, pockets formed between abrasive grains are uniform. When an artificial tooth with elasticity is cut, with the increase of load, entering depth of cutting portion 1a into the elastic artificial tooth increases, by which cutting dusts which have entered into pockets formed between abrasive grains is hindered from being removed, so that with the increase of load, the machinability decreases. However, when human dentin or dental enamel is cut by diamond bur B, since they do not have the elasticity, with the increase of loads, the machinability increases since cutting dusts are favorably removed through pockets formed between abrasive grains.

Further, when artificial tooth made of epoxy resin is cut by diamond bur A under the condition of the same load as that in diamond bur B, with the increase of load, the machinability increases. Though the numerical values of cutting depth against the respective loads differ with a case where artificial tooth made of epoxy resin is cut by diamond bur A of the present invention and a case where human dentin or dental enamel is cut by diamond bur B, a tendency of the machinability being increased is the same as data of the time when human dentin or dental enamel is cut by diamond bur B.

As mentioned hereinabove, a tendency of the time when artificial tooth made of epoxy resin is cut by diamond bur A of the present invention is nearly the same as a tendency of the time when dentin of human tooth or dental enamel is cut by diamond bur B on the market. Accordingly, a sense of operation of the time when human dentin or dental enamel is cut by diamond bur B on the market can be experienced by getting skilled in an operation of the time when an artificial tooth made of epoxy resin is cut by diamond bur A of the present invention.

In the above-mentioned example, a mixture of 25 % of abrasive grains of grain size number # 600, 50 % of abrasive grains of grain size number # 230, and 25 % of abrasive grains of grain size number # 120 (as shown in ① in Table 2 ) is used. However, as shown in ② in Table 2, a mixture of 50 % of abrasive grains of grain size number # 600, 25 % of abrasive grains of grain size number # 230, 25 % of abrasive grains of grain size number # 120 (② in Table 2, or a mixture of 25 % of abrasive grains of grain size number # 600, 25 % of abrasive grains of grain size number # 230, and 50 % of abrasive grains of grain size number # 120 (③ in Table 2) can be used.

**TABLE 2**

| No. | #600 | #230 | #120 |
|---|---|---|---|
| ① | 25% | 50% | 25% |
| ② | 50% | 25% | 25% |
| ③ | 25% | 25% | 50% |

Further, the present example is explained about a case where an artificial tooth made of epoxy resin is cut by diamond bur A of the present invention. However, it is not always necessary that an artificial tooth is made of epoxy resin. An artificial tooth may be made of polypropylene resin and others. Further, there is a case where the stickiness and hardness of artificial tooth change according to material and filling material of an artificial tooth. Therefore, grain size of abrasive grains and the mixture ratio should not be restricted to a given value. It is necessary that they are set suitably according to material, the stickiness and hardness of artificial tooth.

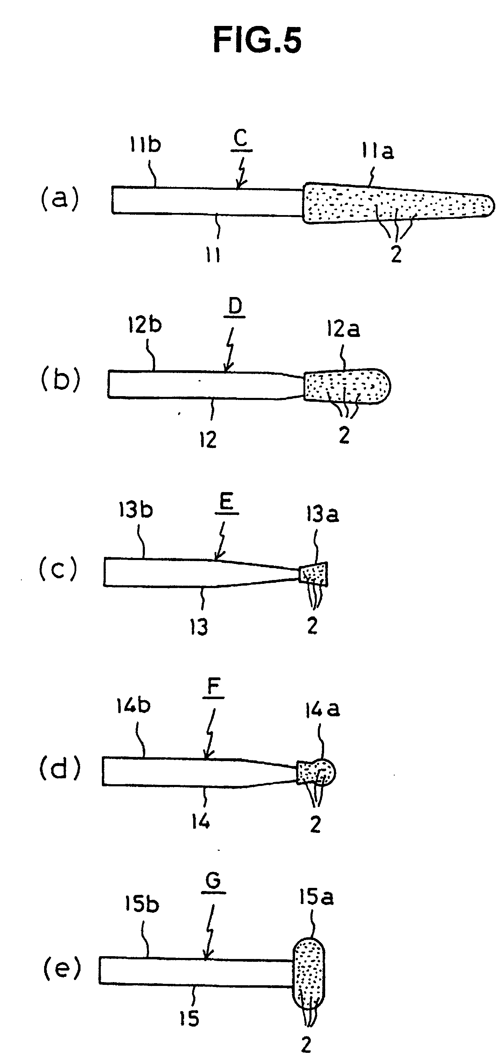

Further, The shape of diamond bur A of the present invention is not restricted to that shown in Fig. 1. As shown in Fig. 5 (a) to (e), various shape can be selected for diamond bur of the present invention, wherein diamond bur C shown in Fig. 5 (a) is provided with tapered-round-end-shaped cutting portion 11a formed on a portion of base metal 11, diamond bur D shown in Fig. 5 (b) is provided with pestle-shaped cutting portion 12a formed on a portion of base metal 12, diamond bur E shown in Fig. 5 (c) is provided with inverted-cone-shaped cutting portion 13a formed on a portion of base metal 13, diamond bur F shown in Fig. 5 (d) is provided with ball-shaped cutting portion 14a formed on a portion of base metal 14, diamond bur G shown in Fig. 5 (e) is provided with wheel-round-edge-shaped cutting portion 15a formed on a portion of base metal 15. Further, base metals 11, 12, 13, 14 and 15 are formed with cylindrical shanks 11b, 12b, 13b, 14b and 15b on the other hand which are held by an air motor in the same manner as in the above-mentioned first example, respectively.

As mentioned in detail hereinabove, a diamond bur of the present invention has various abrasive grains of different grain size. Therefore, it is possible that the machinability of the time when artificial tooth made of epoxy resin, polypropylene resin or the like is cut by a diamond bur of the present invention is equalized nearly with the machinability of the time when human dentin or dental enamel is cut by a diamond bur on the market. Therefore, even in a case where students of dentistry has training for the cutting of tooth by a diamond bur of the present invention, they can grasp the same sense of operation as the sense of operation of the time when a cavity is formed, or an abutment is formed for the treatment of tooth.

## Claims

1. A practical cutting bur (A) comprising a cutting portion (1a) formed on a base metal (1), the cutting portion (1a) comprising abrasive grains (2) secured to the base metal (1),
**characterized in that** a mixture of various abrasive grains (2) with different grain size numbers is secured to the base metal (1) forming pockets between abrasive grains having various grain sizes.

2. A practical cutting bur as claimed in claim 1, wherein said cutting portion is an integral part of a shank, which has an end held by a rotary instrument.

3. A practical cutting bur as claimed in claim 2, wherein the cutting portion has the shape tapered toward the top thereof.

4. A practical cutting bur as claimed in claim 2, wherein the mixture of various abrasive grains with different grains sizes is composed of abrasive grains of grains size number #600, abrasive grains of grain size number #230, and abrasive grains of grain size number #120.

5. A practical cutting bur as claimed in claim 4, wherein the mixture composed of abrasive grains of grain size numbers #600, abrasive grains of grains size number #230, and abrasive grains of grain size number #120 is any one of a mixture of 25% of abrasive grains of grain size number #600, 50% of abrasive grains of grain size number #230, and 25% of abrasive grains of grain size number #120, a mixture of 50% of abrasive grains of grain size number #600, 25% of abrasive grains of grain size number #230s', and 25% of abrasive grains of grain size number #120, and a mixture of 25% of abrasive grains of grain size number #600, 25% of abrasive grains of grain size number #230, and 50% of abrasive grains of grain size number #120.

6. A method of having practical training for the cutting of human tooth by cutting artificial tooth made of plastic by means of a practical cutting bur as claimed in one of claims 1 to 5.

7. A method of having practical training for the cutting of human tooth as claimed in claim 6, wherein the practical cutting bur is used, which has the mixture of various abrasive grains with different grain sizes, composed of abrasive grains of grain size number #600, abrasive grains of grain size number #230, and abrasive grains of grain size number #120.

8. A method of having practical training for the cutting of human tooth as claimed in claim 7, practical method of having training in cutting human tooth, wherein the practical cutting bur is, which has any one of a mixture of 25% of abrasive grains of grain size number #600. 50% of abrasive grains of grain size number #230, and 25% of abrasive grains of grain size number #120, a mixture of 50% of abrasive grains of grain size number #600, 25% of abrasive grains of grain size number #230, and 25% of abrasive grains of grain size number #120, and a mixture of 25% of abrasive grains of grain size number #600, 25% of abrasive grains of grain size number #230, and 50% of abrasive grains of grain size number #120.

## Patentansprüche

1. Fräswerkzeug (A) mit einem auf einem Metallgrundkörper (1) gebildeten Schneidteil (1a), wobei das Schneidteil (1a Schleifkörner (2) aufweist, die auf dem Metallgrundkörper (1) befestigt sind, **dadurch gekennzeichnet, dass** eine Mischung aus unterschiedlichen Schleifkörnern (2) mit verschiedenen Korngrößen auf dem Metallgrundkörper (1) befestigt sind und zwischen den Schleifkörnern mit unterschiedlichen Korngrößen Taschen bilden.

2. Fräswerkzeug nach Anspruch 1, bei welchem das Schneidteil integraler Bestandteil eines Schaftes ist, der ein Ende aufweist, welches von einem rotierenden Instrument gehalten wird.

3. Fräswerkzeug nach Anspruch 2, bei welchem das Schneidteil eine Gestalt aufweist, die sich zur Spitze hin verjüngt.

4. Fräswerkzeug nach Anspruch 2, bei welchem die Mischung aus verschiedenen Schleifkörnern mit unterschiedlichen Korngrößen aus Schleifkörnern zusammengesetzt ist mit einer Korngröße #600, Schleifkörner mit Korngröße #230 und Schleifkörner mit Korngröße #120.

5. Fräswerkzeug nach Anspruch 4, bei welchem die Mischung aus Schleifkörnern mit der Korngröße #600, Schleifkörnern mit der Korngröße #230 und Schleifkörner mit der Korngröße #120 ausgewählt ist aus einer Mischung mit 25% von Schleifkörnern der Korngröße #600, mit 50% von Schleifkörnern der Korngröße #230 und mit 25% von Schleifkörnern mit der Korngröße #120, einer Mischung mit 50% von Schleifkörnern der Korngröße #600, mit 25% von Schleifkörnern mit der Korngröße #230 und mit 25% von Schleifkörnern mit der Korngröße #120, und einer Mischung mit 25% von Schleifkörnern mit der Korngröße #600, mit 25% von Schleifkörnern mit der Korngröße #230 und mit 50% von Schleifkörnern mit der Korngröße #120.

6. Verfahren zur Ausübung des Schneidens eines menschlichen Zahnes durch Schneiden eines aus Plastik hergestellten künstlichen Zahnes mittels eines Fräswerkzeuges nach einem der Ansprüche 1 bis 5.

7. Verfahren zur Ausübung des Schneidens eines menschlichen Zahnes nach Anspruch 6, bei welchem das Fräswerkzeug verwendet wird mit einer Mischung aus unterschiedlichen Schleifkörnern mit unterschiedlichen Korngrößen, wobei die Schleifkörner mit einer Korngröße #600, Schleifkörner mit einer Korngröße #230 und Schleifkörner mit einer Korngröße #120 zusammengesetzt sind.

8. Verfahren zur Ausübung des Schneidens eines menschlichen Zahnes nach Anspruch 7, bei welchem das Fräswerkzeug verwendet wird mit einer der Mischungen aus der Mischung mit 25% von Schleifkörnern der Korngröße #600, mit 50% von Schleifkörnern der Korngröße #230 und mit 25% von Schleifkörnern der Korngröße #120, einer Mischung mit 50% von Schleifkörnern der Korngröße #600, mit 25% von Schleifkörnern der Korngröße #230 und mit 25% von Schleifkörnern der Korngröße #120, und aus einer Mischung mit 25% von Schleifkörnern der Korngröße #600, mit 25% von Schleifkörnern der Korngröße #230 und mit 50% von Schleifkörnern der Korngröße #120.

## Revendications

1. Fraise dentaire (A) comportant une partie de coupe (1a) formée d'une base de métal (1), la partie de coupe (1a) étant formée de grains abrasifs (2) fixés à la base de métal (1),
**caractérisée par**
un mélange de différents grains abrasifs (2) avec des granulométries différentes, ce mélange étant fixé à la base métallique (1) en formant des poches entre les grains abrasifs de granulométries différentes.

2. Fraise dentaire selon la revendication 1,
**caractérisée en ce que**
la partie de coupe fait corps avec une tige dont une extrémité est tenue par un appareil rotatif.

3. Fraise dentaire selon la revendication 2,
**caractérisée en ce que**
la partie de coupe (1a) a une forme conique vers l'extrémité.

4. Fraise dentaire selon la revendication 2,
**caractérisée en ce que**
le mélange des différents grains abrasifs à différentes granulométries est formé de grains abrasifs de granulométrie #600, de grains abrasifs de granulométrie #230 et de grains abrasifs de granulométrie #120.

5. Fraise dentaire selon la revendication 4,
**caractérisée en ce que**
le mélange est formé de grains abrasifs d'une granulométrie #600, de grains abrasifs d'une granulométrie #230 et de grains abrasifs d'une granulométrie #120 et le mélange est un mélange quelconque de 25 % de grains abrasifs d'une granulométrie #600, de 50 % de grains abrasifs d'une granulométrie #230 et de 25 % de grains abrasifs d'une granulométrie #120, un mélange de 50 % de grains abrasifs d'une granulométrie #600, de 25 % de grains abrasifs d'une granulomêtrie #230 et 25 % de grains abrasifs d'une granulométrie #120 ainsi qu'un mélange de 25 % de grains abrasifs d'une granulométrie #600, de 25 % de grains abrasifs d'une granulométrie #230 et de 50 % de grains abrasifs d'une granulométrie #120.

6. Procédé pour un exercice pratique de taille d'une dent humaine par la taille d'une dent artificielle en plastique à l'aide d'une fraise dentaire selon l'une quelconque des revendications 1 à 5.

7. Procédé d'entraînement pratique pour tailler une dent humaine selon la revendication 6,
**caractérisé en ce qu'**
on utilise une fraise dentaire ayant un mélange de différents grains abrasifs de différentes granulométrics comprenant des granulométries #600, de grains abrasifs d'une granulométric #230 et de. grains abrasifs d'une granulométrie #120.

8. Procédé d'entraînement pratique pour tailler une dent humaine selon la revendication 7,
**caractérisé en ce qu'**
on utilise une fraise dentaire ayant l'un quelconque des mélanges suivant : un mélange de 25 % de grains abrasifs d'une granulométrie #600, 50 % de grains abrasifs d'une granulométrie #230 et 25 % de grains abrasifs d'une granulométrie #120 ou encore un mélange de 50 % de grains abrasifs d'une granulométrie #600, 25 % de grains abrasifs d'une granulométrie #230 et 25 % de grains abrasifs d'une granulométrie #120 ou encore un mélange de 25 % de grains abrasifs d'une granulométrie #600, 25 % de grains abrasifs d'une granulométrie #230 et 50 % de grains abrasifs d'une granulométrie #120.
